# EUROPÄISCHE PATENTSCHRIFT

(11) **EP 2 853 340 B1**
(45) Veröffentlichungstag und Bekanntmachung des Hinweises auf die Patenterteilung: **09.11.2016**
(21) Anmeldenummer: 14003040.4
(22) Anmeldetag: 03.09.2014
(51) Int. Cl.: B23Q 1/00, F16L 37/00, B23Q 37/00

(54) **Bearbeitungsmaschinensystem**
Machining unit system
Système de machine d'usinage

(30) Priorität: 27.09.2013 DE 102013016125
(43) Veröffentlichungstag der Anmeldung: 01.04.2015
(73) Patentinhaber: Ludwig Ehrhardt GmbH, 35321 Laubach (DE)
(72) Erfinder: Ehrhardt, Winfried, 35321 Laubach (DE); Noll, Edmund, 35423 Lich (DE)
(74) Vertreter: Beier, Ralph

(56) Entgegenhaltungen:
- WO-A2-2007/104893
- DE-A1- 10 246 468

## Beschreibung

Die Erfindung betrifft eine Bearbeitungsmaschine (z.B. Presse oder Stanze) zur Bearbeitung von Werkstücken.

Aus dem Stand der Technik sind Bearbeitungsmaschinen (z.B. Pressen oder Stanzen) bekannt, die in der Regel fest mit einem Fundament verschraubt sind und dauerhaft an die zum Betrieb erforderlichen Leitungen (z.B. Hydraulikleitungen, Pneumatikleitungen, Elektroleitungen) angeschlossen sind.

Nachteilig an diesen bekannten Bearbeitungsmaschinen ist die Tatsache, dass an einem bestimmten Arbeitsplatz jeweils nur eine bestimmte Operation durchgeführt werden kann. So kann beispielsweise an einem Arbeitsplatz mit einer Presse nur ein Pressvorgang durchgeführt werden, wohingegen das Werkstück für einen Bohrvorgang oder einen Stanzvorgang zu einem anderen Arbeitsplatz transportiert werden muss.

Aus DE 102 46 468 A1 ist die Idee bekannt, eine Bearbeitungsmaschine mittels eines Kupplungssystems mechanisch lösbar mit einem Trägersystem zu verbinden. Das Kupplungssystem weist hierbei eine Schwalbenschwanzführung und eine Einschubeinheit mit der Bearbeitungsmaschine auf, wobei die Einschubeinheit mit der Bearbeitungsmaschine in der Schwalbenschwanzführung in das Trägersystem eingeschoben werden kann. Nachteilig hierbei ist zunächst die Tatsache, dass zum Einschieben bzw. Herausziehen der Bearbeitungsmaschine seitlich Platz benötigt wird. Ein weiterer Nachteil besteht in der schlechten Automatisierbarkeit des Auswechselungsvorgangs.

Ferner ist zum Stand der Technik hinzuweisen auf DE 10 2011 004 978 A1, DE 199 20 291 A1 und DE 197 29 369 C2.

Schließlich ist zum Stand der Technik noch hinzuweisen auf WO 2007/104893 A2. Auch diese Druckschrift offenbart jedoch keine Bearbeitungsmaschine, die mittels eines Spannsystems an einem Trägersystem befestigt werden kann und eine Materialzirkulation durch das Spannsystem hindurch erlaubt.

Der Erfindung liegt deshalb die Aufgabe zugrunde, eine entsprechend verbesserte Bearbeitungsmaschine zu schaffen.

Diese Aufgabe wird durch eine Bearbeitungsmaschine gemäß Anspruch 1 gelöst.

Die Erfindung umfasst die allgemeine technische Lehre, eine Bearbeitungsmaschine nicht dauerhaft und fest mit dem Fundament zu verbinden, sondern vielmehr mittels eines Kupplungssystems, das eine lösbare mechanische Kupplung zwischen der Bearbeitungsmaschine einerseits und einem Trägersystem andererseits ermöglicht. Die lösbare mechanische Kupplung ermöglicht also an einem bestimmten Arbeitsplatz einen Austausch einer bestimmten Bearbeitungsmaschine (z.B. Presse) durch eine andere Bearbeitungsmaschine (z.B. Stanze), so dass an einem bestimmten Arbeitsplatz nacheinander verschiedene Operationen (z.B. Pressen und Stanzen) durchgeführt werden können.

Das Kupplungssystem erfüllt bei der erfindungsgemäßen Bearbeitungsmaschine vorzugsweise verschiedene Funktionen, die im Folgenden kurz beschrieben werden.

Zum einen dient das Kupplungssystem - wie bereits vorstehend erwähnt - zur lösbaren mechanischen Kupplung der Bearbeitungsmaschine mit einem Trägersystem, damit die Bearbeitungsmaschine fest verankert ist.

Zum anderen ermöglicht das Kupplungssystem auch eine fluidische Kupplung zwischen der Bearbeitungsmaschine und dem Trägersystem. Beispielsweise kann das Kupplungssystem Hydraulikkupplungen oder Pneumatikkupplungen aufweisen, um die Bearbeitungsmaschine mit Hydraulikflüssigkeit oder Druckluft zu versorgen.

Weiterhin kann das erfindungsgemäße Kupplungssystem die Bearbeitungsmaschine auch elektrisch mit dem Trägersystem kuppeln.

Beispielsweise kann über das Kupplungssystem die zum Betrieb der Bearbeitungsmaschine erforderliche elektrische Energie von dem Trägersystem zu der Bearbeitungsmaschine übertragen werden.

Weiterhin besteht die Möglichkeit, dass über das Kupplungssystem elektrische Steuersignale zu der Bearbeitungsmaschine übertragen werden, wobei die übertragenen Steuersignale den Betrieb der Bearbeitungsmaschine steuern.

Ferner besteht auch die Möglichkeit, dass elektrische Rückmeldungssignale von der Bearbeitungsmaschine über das Kupplungssystem zu dem Trägersystem übertragen werden, wo diese Rückmeldungssignale dann ausgewertet werden können.

Bei der vorstehend kurz erwähnten fluidischen Kupplung weisen vorzugsweise sowohl die Bearbeitungsmaschine als auch das Trägersystem Fluidanschlüsse auf, wobei das Kupplungssystem die Fluidanschlüsse der Bearbeitungsmaschine einerseits und des Trägersystems andererseits im gekuppelten Zustand miteinander verbindet.

Erfindungsgemäß besteht die Möglichkeit einer Fluidzirkulation durch das Kupplungssystem hindurch. Die Bearbeitungsmaschine weist dann einen Hinleitungsanschluss und einen Rückleitungsanschluss auf, wobei ein Fluid (z.B. Hydraulikflüssigkeit) über den Hinleitungsanschluss zugeführt und über den Rückleitungsanschluss wieder zurückgeführt wird. Bei einer solchen Materialzirkulation weist auch das Trägersystem einen entsprechenden Hinleitungsanschluss und einen entsprechenden Rückleitungsanschluss auf. Das Kupplungssystem enthält ebenfalls eine Hinleitung und eine Rückleitung, um die Materialzirkulation durch das Kupplungssystem hindurch zu ermöglichen.

Bei der vorstehend beschriebenen elektrischen Kupplung zwischen der Bearbeitungsmaschine und dem Trägersystem weisen die Bearbeitungsmaschine und das Trägersystem jeweils Elektroanschlüsse auf, die von dem Kupplungssystem im gekuppelten Zustand miteinander verbunden werden.

Bei einer solchen elektrischen Kupplung weist das Kupplungssystem vorzugsweise eine Energiekupplung und eine Signalkupplung auf.

Über die Energiekupplung kann die zum Betrieb der Bearbeitungsmaschine erforderliche elektrische Energie zu der Bearbeitungsmaschine übertragen werden, wenn die Bearbeitungsmaschine angekuppelt ist.

Über die Signalkupplung können beispielsweise Steuersignale zu der Bearbeitungsmaschine geleitet werden, um den Betrieb der Bearbeitungsmaschine zu steuern. Darüber hinaus können über die Signalkupplung auch elektrische Rückmeldungssignale von der Bearbeitungsmaschine empfangen werden.

Ferner besteht im Rahmen der Erfindung auch die Möglichkeit einer Lichtleiterkupplung zur Signalübertragung zwischen dem Trägersystem und der Bearbeitungsmaschine. Die Bearbeitungsmaschine und das Trägersystem weisen dann vorzugsweise Lichtleiteranschlüsse auf, die von dem erfindungsgemäßen Kupplungssystem in dem angekuppelten Zustand miteinander verbunden werden.

Darüber hinaus ist vorzugsweise ein Identifikationssystem vorgesehen, um die an einem bestimmten Arbeitsplatz jeweils aktuell angekuppelte Bearbeitungsmaschine identifizieren zu können. In der Praxis identifiziert das Identifikationssystem vorzugsweise den Typ der angekuppelten Bearbeitungsmaschine. Das Identifikationssystem ermöglicht also beispielsweise eine Unterscheidung einer angekuppelten Presse von einer angekuppelten Stanze. Diese Identifikation des Typs der angekuppelten Bearbeitungsmaschine ist wichtig, damit die Steuerung entsprechend angepasst werden kann.

Das Identifikationssystem weist vorzugsweise eine Identifikationsmarkierung auf, die an der Bearbeitungsmaschine angebracht ist, um die Bearbeitungsmaschine oder den Typ der Bearbeitungsmaschine zu identifizieren. Weiterhin umfasst das Identifikationssystem vorzugsweise einen Identifikationssensor zum Auslesen der Identifikationsmarkierung, wobei der Identifikationssensor beispielsweise an dem Kupplungssystem oder an dem Trägersystem angebracht sein kann. Im angekuppelten Zustand liest der Identifikationssensor dann die Identifikationsmarkierung an der Bearbeitungsmaschine aus, um die Bearbeitungsmaschine oder den Typ der Bearbeitungsmaschine zu identifizieren.

Beispielsweise kann es sich bei der Identifikationsmarkierung um einen RFID-Transponder und bei dem Identifikationssensor um ein RFID-Lesegerät handeln (RFID: Radio-Frequency Identification).

Es wurde bereits vorstehend kurz erwähnt, dass das Kupplungssystem auch eine mechanische Verbindung zwischen dem Trägersystem und der auswechselbaren Bearbeitungsmaschine herstellt, um die Bearbeitungsmaschine zu fixieren. Hierzu weist das Kupplungssystem vorzugsweise ein Nullpunktspannsystem auf. Derartige Nullpunktspannsysteme sind an sich aus dem Stand der Technik bekannt und müssen deshalb nicht ausführlich beschrieben werden.

Vorzugsweise weist das Spannsystem jedoch mindestens einen Spannnippel auf, der an der Bearbeitungsmaschine angebracht ist und zum Ankuppeln in eine Aufnahmebohrung in dem Kupplungssystem eingeführt werden kann. Nach dem Einführen des Spannnippels in die Aufnahmebohrung kann der Spannnippel dann durch ein Spannelement in der Aufnahmebohrung gespannt werden. Beispielsweise kann es sich bei dem Spannelement um eine exzentrische Welle oder einen Spannschieber handeln, was an sich aus dem Stand der Technik bekannt ist und deshalb nicht näher beschrieben werden muss.

In einem bevorzugten Ausführungsbeispiel der Erfindung weist das Kupplungssystem eine Kupplungsplatte auf, die zwischen der Bearbeitungsmaschine und dem Trägersystem angeordnet ist. Auf der Seite der Bearbeitungsmaschine weist die Kupplungsplatte vorzugsweise Fluidkupplungen und Elektrokupplungen auf, um eine fluidische und elektrische Verbindung zwischen der Bearbeitungsmaschine und der Kupplungsplatte herzustellen. Die elektrischen Kupplungen können beispielsweise als Steckkontakte ausgebildet sein.

Es wurde bereits vorstehend erwähnt, dass es sich bei der Bearbeitungsmaschine beispielsweise um eine Presse oder eine Stanze handeln kann. Der im Rahmen der Erfindung verwendete Begriff einer Bearbeitungsmaschine ist jedoch allgemein zu verstehen und umfasst beispielsweise auch andere Typen von Werkzeugmaschinen, wie beispielsweise Ziehmaschinen, Drückmaschinen, Stemmmaschinen, Bohrmaschinen oder Drehmaschinen.

Darüber hinaus ist zu erwähnen, dass das Kupplungssystem vorzugsweise im Rahmen eines einzigen Kupplungsvorgangs sowohl eine mechanische Verbindung, eine fluidische Verbindung als auch eine elektrische Verbindung zwischen der Bearbeitungsmaschine und dem Trägersystem herstellt. Bei diesem Kupplungsvorgang erfolgt vorzugsweise eine einzige lineare Kupplungsbewegung der Bearbeitungsmaschine relativ zu dem Kupplungssystem bzw. dem Trägersystem.

Weiterhin ist zu erwähnen, dass die Erfindung auch Schutz beansprucht für eine Bearbeitungsmaschine, die weitgehend herkömmlich ausgebildet sein und lediglich einen Teil (z.B. Spannzapfen) eines Kupplungssystems aufweist.

In der Praxis ermöglicht die erfindungsgemäße Bearbeitungsmaschine sehr große Arbeitsinhalte an einem Werkstück. Das erfordert die große Flexibilität, die mit diesem System erreicht wird bei sehr präziser Anpassung an die jeweilige Aufgabenstellung.

Vorzugsweise ist auch eine Ablaufmöglichkeit für Lecköl bzw. ein anderes Fluid vorgesehen, weil üblicherweise bei Montagevorgängen kein Tropfen davon an ein Werkstück kommen soll.

Andere vorteilhafte Weiterbildungen der Erfindung sind in den Unteransprüchen gekennzeichnet oder werden nachstehend zusammen mit der Beschreibung eines bevorzugten Ausführungsbeispiels der Erfindung anhand der Figuren näher erläutert. Es zeigen:
- Figur 1: ein erfindungsgemäßes Bearbeitungssystem mit einer Bearbeitungsmaschine, einer Kupplungsplatte und einer Ansteuereinheit als Trägersystem in einer Perspektivansicht von schräg vorne unten,
- Figur 2: das Bearbeitungssystem gemäß Figur 1 in einer seitlichen Perspektivansicht von unten,
- Figur 3: das Bearbeitungssystem aus den Figuren 1 und 2 in einer Perspektivansicht von schräg vorne oben,
- Figur 4: das Bearbeitungssystem aus den Figuren 1-3 in einer Perspektivansicht von schräg oben hinten, sowie
- Figur 5: ein Flussdiagramm zur Erläuterung des Bearbeitungsverfahrens.

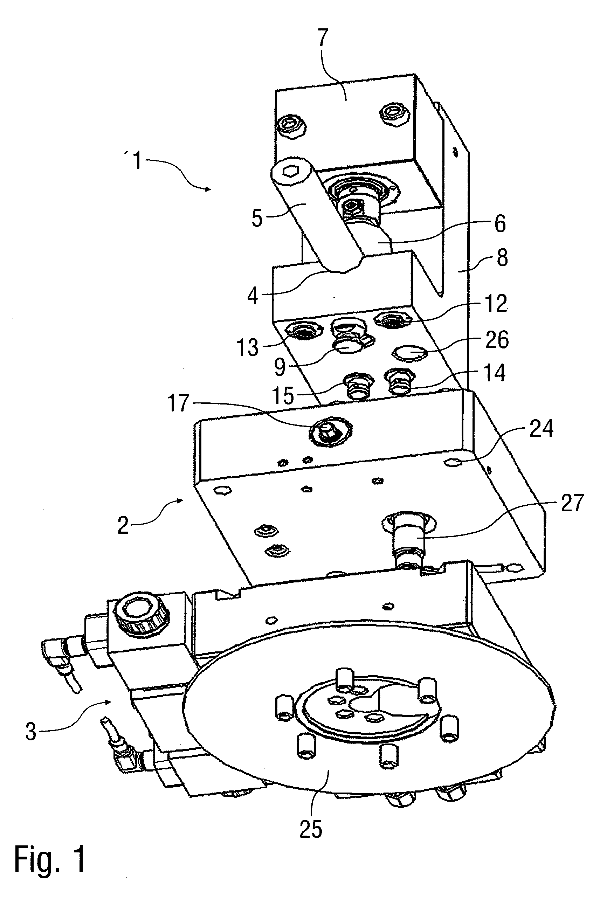

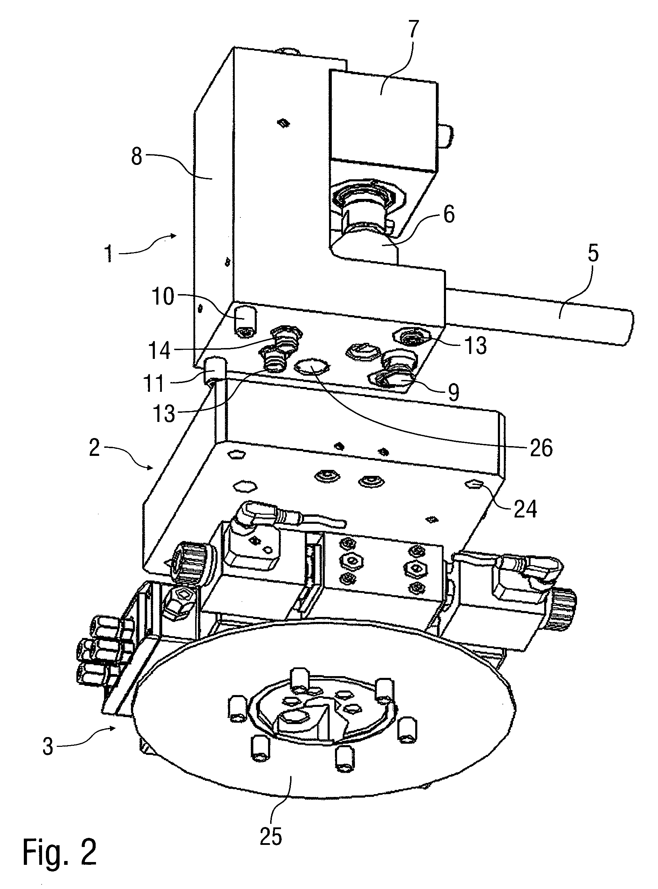

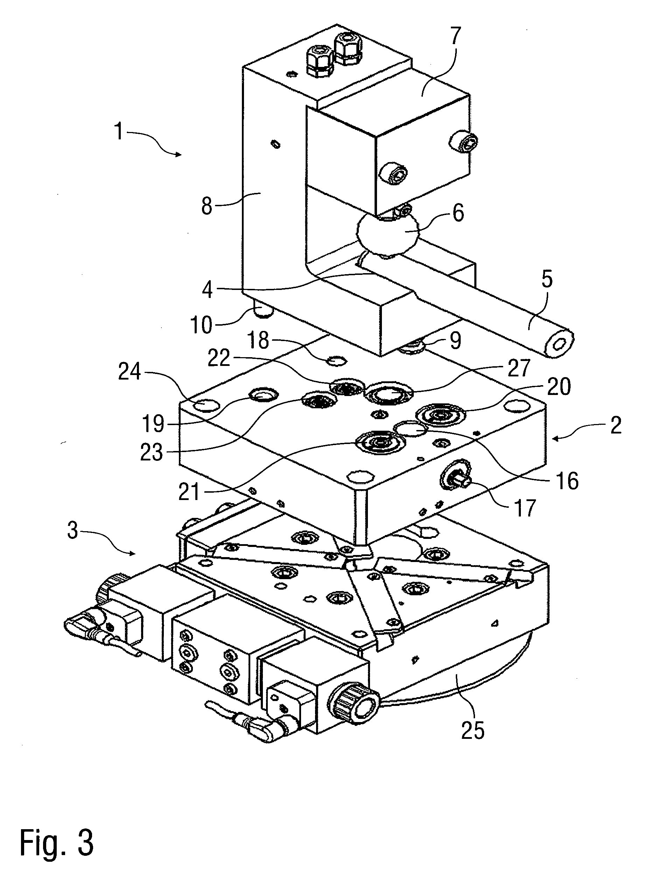

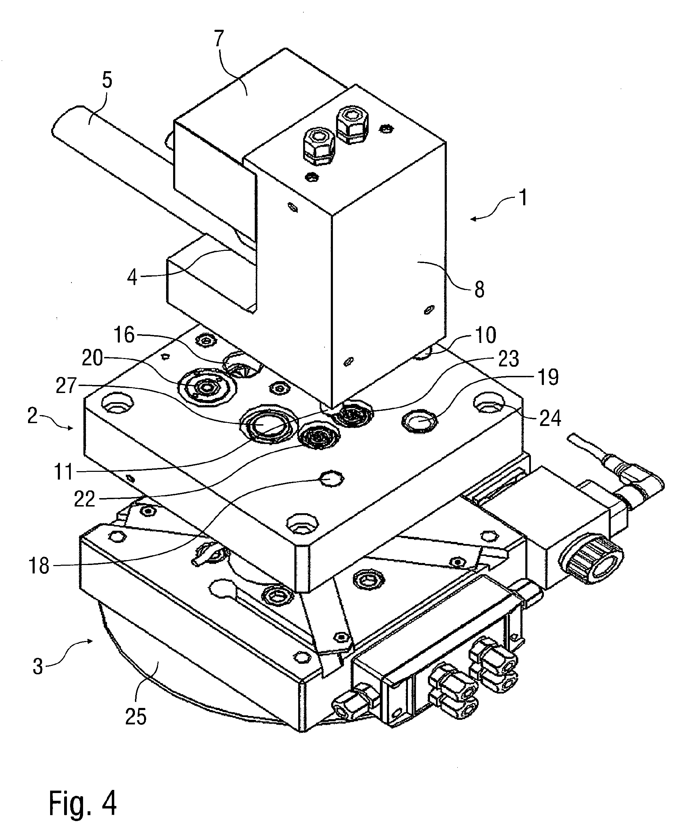

Die Figuren 1-4 zeigen verschiedene Perspektivansichten eines erfindungsgemäßen Bearbeitungssystems, das als Baugruppen im Wesentlichen eine Bearbeitungsmaschine 1, eine Kupplungsplatte 2 und eine Ansteuereinheit 3 aufweist, wobei sich bei der Bearbeitungsmaschine 1 in diesem Ausführungsbeispiel um eine Presse handelt.

Die Bearbeitungsmaschine 1 weist in herkömmlicher Weise eine Werkstückaufnahme 4 auf, in die ein zu bearbeitendes Werkstück 5 eingesetzt werden kann. Das Werkstück 5 wird dann im Betrieb von einem Werkzeug 6 bearbeitet, wobei das Werkzeug 6 von einem Hydraulikzylinder 7 bewegt werden kann. Der Hydraulikzylinder 7 ist an einem Träger 8 der Bearbeitungsmaschine 1 angebracht.

An ihrer Unterseite weist die Bearbeitungsmaschine 1 einen Spannzapfen 9 und zwei Positionierbolzen 10, 11 auf, um die Bearbeitungsmaschine 1 mechanisch mit der Kupplungsplatte 2 zu koppeln, wie noch detailliert beschrieben wird.

Darüber hinaus weist die Bearbeitungsmaschine an ihrer Unterseite Hydraulikkupplungen 12, 13 auf, um die Bearbeitungsmaschine 1 auch hydraulisch mit der Kupplungsplatte 2 verbinden zu können, wie ebenfalls noch detailliert beschrieben wird.

Ferner sind an der Unterseite der Bearbeitungsmaschine 1 Elektrokupplungen 14, 15 angebracht, um die Bearbeitungsmaschine 1 auch elektrisch mit der Kupplungsplatte 2 verbinden zu können, wie noch detailliert beschrieben wird.

Die Kupplungsplatte 2 weist an ihrer Oberseite eine Spannzapfenaufnahme 16 auf, in die der Spannzapfen 9 an der Unterseite der Bearbeitungsmaschine 1 eingeführt werden kann, um die Bearbeitungsmaschine 1 mechanisch mit der Kupplungsplatte 2 zu verbinden. Nach dem Einfahren des Spannzapfens 9 in die Spannzapfenaufnahme 16 kann der Spannzapfen 9 dann in der Spannzapfenaufnahme 16 durch eine exzentrische Welle gespannt werden, wobei die exzentrische Welle von einer Spannschraube 17 gedreht werden kann, um den Spannzapfen 9 in der Spannzapfenaufnahme 16 zu fixieren und zu spannen.

Darüber hinaus weist die Kupplungsplatte 2 an ihrer Oberseite zwei Aufnahmebohrungen 18, 19 für die Positionierbolzen 10, 11 der Bearbeitungsmaschine 1 auf. Beim mechanischen Ankuppeln der Bearbeitungsmaschine 1 an die Kupplungsplatte 2 werden die Positionierbolzen 10, 11 also in die entsprechenden Aufnahmebohrungen 18, 19 an der Oberseite der Kupplungsplatte 2 eingeführt.

Darüber hinaus weist die Kupplungsplatte 2 an ihrer Oberseite zwei Hydraulikkupplungen 20, 21 auf, die beim Ankuppeln der Bearbeitungsmaschine 1 automatisch eine Verbindung herstellen zu den entsprechend komplementär ausgeführten Hydraulikkupplungen 12, 13 an der Unterseite der Bearbeitungsmaschine 1.

Ferner weist die Kupplungsplatte 2 an ihrer Oberseite zwei Elektrokupplungen 22, 23 auf, die beim Ankuppeln der Bearbeitungsmaschine automatisch eine elektrische Verbindung herstellen mit den entsprechend komplementär ausgeführten Elektrokupplungen 14, 15 an der Unterseite der Bearbeitungsmaschine 1.

Darüber hinaus weist die Kupplungsplatte 2 an ihren Ecken jeweils eine Bohrung 24 auf, um die Kupplungsplatte 2 mit einem Trägersystem der Ansteuereinheit 3 verschrauben zu können.

Ferner ist noch zu erwähnen, dass das Trägersystem einen Drehtisch 25 aufweist, um das Bearbeitungssystem 1 um eine Hochachse drehen zu können.

Schließlich ist noch zu erwähnen, dass die Bearbeitungsmaschine 1 an ihrer Unterseite einen RFID-Transponder 26 aufweist, um den Typ der angekuppelten Bearbeitungsmaschine 1 identifizieren zu können. Hierzu weist die Kupplungsplatte 2 ein RFID-Lesegerät 27 auf, das im angekuppelten Zustand in der Lage ist, den RFID-Transponder 26 der Bearbeitungsmaschine 1 auszulesen. Der RFID-Transponder 26 kann als gespeicherte Information beispielsweise Informationen über die Bearbeitungsmaschine 1 enthalten, wie beispielsweise Hersteller, Seriennummer, Typ und Herstellungsdatum der Bearbeitungsmaschine 1. Darüber hinaus kann der RFID-Transponder 26 als gespeicherte Informationen auch Betriebskennwerte enthalten, wie beispielsweise Grenzwerte für den Hydraulikdruck und ähnliches.

Vorteilhaft an dem beschriebenen Bearbeitungssystem ist die Tatsache, dass die Bearbeitungsmaschine 1 schnell und einfach durch einen anderen Typ einer Bearbeitungsmaschine ausgewechselt werden kann. Dies bietet den Vorteil, dass an einem bestimmten Arbeitsplatz nacheinander ohne große Umrüstarbeiten verschiedene Operationen durchgeführt werden können.

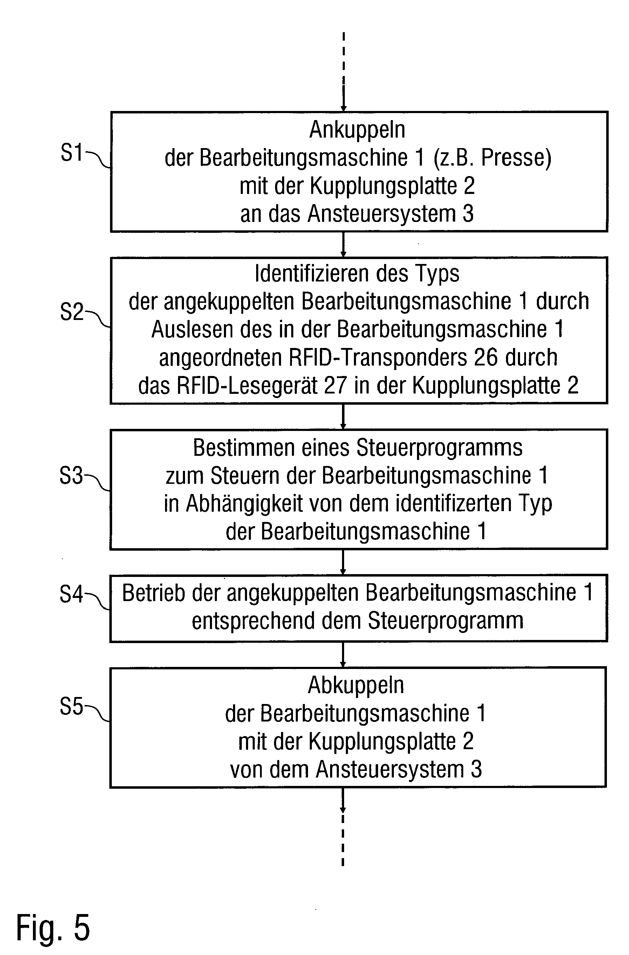

Figur 5 zeigt ein Flussdiagramm zur Verdeutlichung des Betriebsverfahrens.

In einem ersten Schritt S1 wird zunächst eine bestimmte Bearbeitungsmaschine 1 mit der Kupplungsplatte 2 an das Ansteuersystem 3 (Trägersystem) angekuppelt. Bei diesem Ankupplungsvorgang wird eine mechanische, hydraulische und elektrische Verbindung zwischen der Bearbeitungsmaschine 1 einerseits und der Kupplungsplatte 2 andererseits hergestellt.

In einem weiteren Schritt S2 wird dann der Typ der angekuppelten Bearbeitungsmaschine 1 identifiziert, indem der RFID-Transponder 26 in der Bearbeitungsmaschine durch das RFID-Lesegerät 27 in dem Trägersystem ausgelesen wird.

In einem Schritt S3 wird dann in Abhängigkeit von dem identifizierten Typ der angekuppelten Bearbeitungsmaschine 1 ein Steuerprogramm bestimmt.

In einem Schritt S4 erfolgt dann ein Betrieb der angekuppelten Bearbeitungsmaschine 1 entsprechend dem Steuerprogramm.

In einem Schritt S5 wird die Bearbeitungsmaschine 1 nach dem Abschluss der Operation dann wieder von der Kupplungsplatte 2 abgekuppelt.

Die Schritte S1-S5 können dann mit einer anderen Bearbeitungsmaschine erneut durchgeführt werden. Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen so weit sie in den Schutzbereich der beigefügten Ansprüchen fallen.

### Bezugszeichenliste:

- 1: Bearbeitungsmaschine (Presse)
- 2: Kupplungsplatte
- 3: Ansteuereinheit (Trägersystem)
- 4: Werkstückaufnahme
- 5: Werkstück
- 6: Werkzeug
- 7: Hydraulikzylinder
- 8: Träger
- 9: Spannzapfen (Einzugsnippel
- 10: Positionierbolzen
- 11: Positionierbolzen
- 12: Hydraulikkupplung
- 13: Hydraulikkupplung
- 14: Elektrokupplung
- 15: Elektrokupplung
- 16: Spannzapfenaufnahme
- 17: Spannschraube
- 18: Aufnahmebohrung für Positionierbolzen
- 19: Aufnahmebohrung für Positionierbolzen
- 20: Hydraulikkupplung
- 21: Hydraulikkupplung
- 22: Elektrokupplung
- 23: Elektrokupplung
- 24: Bohrungen
- 25: Drehtisch
- 26: RFID-Transponder
- 27: RFID-Lesegerät

## Patentansprüche

1. Bearbeitungsmaschinensystem (1) zur Bearbeitung von Werkstücken (5) mit
a) einer Bearbeitungsmaschine (1), insbesondere einer Presse oder einer Stanze,
b) einem Trägersystem (3) und
c) einem Kupplungssystem (2) zur lösbaren mechanischen Kupplung der Bearbeitungsmaschine (1) mit dem Trägersystem (3),
**dadurch gekennzeichnet,**
d) **dass** die Bearbeitungsmaschine (1) einen Hinleitungsanschluss und einen Rückleitungsanschluss aufweist, um eine Fluidzirkulation zu ermöglichen, und
e) **dass** das Trägersystem (3) einen Hinleitungsanschluss und einen Rückleitungsanschluss aufweist, um die Fluidzirkulation zu ermöglichen, und
f) **dass** das Kupplungssystem (2) eine Hinleitung und eine Rückleitung aufweist, um die Fluidzirkulation durch das Kupplungssystem (2) hindurch zu ermöglichen, und
g) **dass** das Kupplungssystem (2) ein Spannsystem (9, 16, 17) aufweist, insbesondere ein Nullpunktspannsystem (9, 16, 17), um die Bearbeitungsmaschine (1) an dem Trägersystem (3) zu spannen und zu fixieren.

2. Bearbeitungsmaschinensystem (1) nach Anspruch 1,
**dadurch gekennzeichnet,**
a) **dass** das Kupplungssystem (2) die Bearbeitungsmaschine (1) fluidisch mit dem Trägersystem (3) kuppelt, und
b) **dass** das Kupplungssystem (2) die Bearbeitungsmaschine (1) auch elektrisch mit dem Trägersystem (3) kuppelt.

3. Bearbeitungsmaschinensystem (1) nach Anspruch 2,
**dadurch gekennzeichnet,**
a) **dass** die Bearbeitungsmaschine (1) zur Fluidversorgung der Bearbeitungsmaschine (1) mindestens einen Fluidanschluss (12, 13) aufweist, insbesondere einen Hydraulikanschluss oder einen Druckluftanschluss,
b) **dass** das Trägersystem (3) mindestens einen Fluidanschluss aufweist zur Fluidversorgung der Bearbeitungsmaschine (1),
c) **dass** das Kupplungssystem (2) die Fluidanschlüsse (12, 13) der Bearbeitungsmaschine (1) und des Trägersystems (3) im gekuppelten Zustand miteinander verbindet.

4. Bearbeitungsmaschinensystem (1) nach einem der vorhergehenden Ansprüche, **dadurch gekennzeichnet,**
a) **dass** die Bearbeitungsmaschine (1) mindestens einen Elektroanschluss (14, 15) aufweist, insbesondere zur Stromversorgung oder Steuerung der Bearbeitungsmaschine (1) oder zur Signalrückmeldung von der Bearbeitungsmaschine (1),
b) **dass** das Trägersystem (3) mindestens einen Elektroanschluss aufweist, insbesondere zur Stromversorgung oder Steuerung der Bearbeitungsmaschine (1) oder zur Signalrückmeldung von der Bearbeitungsmaschine (1),
c) **dass** das Kupplungssystem (2) die Elektroanschlüsse (14, 15) der Bearbeitungsmaschine (1) und des Trägersystems (3) im gekuppelten Zustand miteinander verbindet.

5. Bearbeitungsmaschinensystem (1) nach einem der vorhergehenden Ansprüche, **dadurch gekennzeichnet,**
a) **dass** das Kupplungssystem (2) mindestens eine Energiekupplung (20, 21) aufweist, wobei über die Energiekupplung (20, 21) die zum Betrieb der Bearbeitungsmaschine (1) erforderliche Energie zu der Bearbeitungsmaschine (1) übertragen wird, und/oder
b) **dass** das Kupplungssystem (2) mindestens eine Signalkupplung (22, 23) aufweist, wobei über die Signalkupplung (22, 23)
b1) Steuersignale zu der Bearbeitungsmaschine (1) geleitet werden, um die Bearbeitungsmaschine (1) zu steuern, und/oder
b2) Rückmeldungssignale von der Bearbeitungsmaschine (1) empfangen werden.

6. Bearbeitungsmaschinensystem (1) nach einem der vorhergehenden Ansprüche, **gekennzeichnet durch** ein Identifikationssystem (26, 27) zur Identifikation der angekuppelten Bearbeitungsmaschine (1).

7. Bearbeitungsmaschinensystem (1) nach Anspruch 6,
**dadurch gekennzeichnet,**
a) **dass** das Identifikationssystem (26, 27) eine Identifikationsmarkierung (26) aufweist, die an der Bearbeitungsmaschine (1) angebracht ist, insbesondere in Form eines RFID-Transponders (26),
b) **dass** das Identifikationssystem (26, 27) einen Identifikationssensor (27) aufweist, der an dem Kupplungssystem (2) oder an dem Trägersystem (3) angebracht ist, insbesondere in Form eines RFID-Lesegeräts (27) oder eines optischen Sensors, und
c) **dass** der Identifikationssensor (27) die Identifikationsmarkierung (26) ausliest, wenn die Bearbeitungsmaschine (1) mittels des Kupplungssystems (2) an das Trägersystem (3) gekuppelt ist.

8. Bearbeitungsmaschinensystem (1) nach einem der vorhergehenden Ansprüche, **dadurch gekennzeichnet, dass** das Spannsystem (9, 16, 17) folgendes aufweist:
a) einen Spannnippel (9), der an der Bearbeitungsmaschine (1) angebracht ist,
b) eine Aufnahmebohrung (16) für den Spannnippel, wobei die Aufnahmebohrung (16) in dem Kupplungssystem (2) angeordnet ist, und
c) ein Spannelement (17), insbesondere eine exzentrische Welle, zum lösbaren Spannen des Spannnippels (9) in der Aufnahmebohrung (16).

9. Bearbeitungsmaschinensystem (1) nach einem der vorhergehenden Ansprüche, **dadurch gekennzeichnet,**
a) **dass** das Kupplungssystem (2) eine Kupplungsplatte (2) aufweist, die zwischen der Bearbeitungsmaschine (1) und dem Trägersystem (3) angeordnet ist, und/oder
b) **dass** die Kupplungsplatte (2) auf der Seite der Bearbeitungsmaschine (1) Fluidkupplungen (20, 21) aufweist, die im gekuppelten Zustand automatisch öffnen und im getrennten Zustand automatisch schließen, und/oder
c) **dass** die Kupplungsplatte (2) elektrische Steckkontakte (14, 15) aufweist.

## Claims

1. Machining unit system (1) for machining workpieces (5) with
a) a machining unit (1), in particular a press or a punch,
b) a carrier system (3) and
c) a coupling system (2) for detachable mechanical coupling of the machining unit (1) to the carrier system (3),
**characterised in that,**
d) the machining unit (1) comprises a delivery pipe connection and a return pipe connection to allow fluid circulation, and
e) the carrier system (3) comprises a delivery pipe connection and a return pipe connection, to allow fluid circulation, and
f) the coupling system (2) comprises a delivery pipe and a return pipe to allow fluid circulation through the coupling system (2), and
g) the coupling system (2) comprises a clamping system (9, 16, 17), in particular a zero-point clamping system (9, 16, 17), to clamp and fix the machining unit (1) onto the carrier system (3).

2. Machining unit system (1) according to Claim 1,
**characterised in that**
a) the coupling system (2) couples the machining unit (1) to the carrier system (3) fluidically, and
b) the coupling system (2) also couples the machining unit (1) to the carrier system (3) electrically.

3. Machining unit system (1) according to Claim 2,
**characterised in that**
a) the machining unit (1) comprises at least one fluid connection (12, 13), in particular a hydraulic connection or a compressed air connection, to supply the machining unit (1) with fluid.
b) the carrier system (3) comprises at least one fluid connection to supply the machining unit (1) with fluid,
c) the coupling system (2) connects the fluid connections (12, 13) of the machining unit (1) and the carrier system (3) to each other when coupled.

4. Machining unit system (1) according to one of the preceding claims, **characterised in that**
a) the machining unit (1) comprises at least one electrical connection (14, 15), in particular for the electrical supply or control of the machining unit (1) or for signal feedback from the machining unit (1),
b) the carrier system (3) comprises at least one electrical connection, in particular for the electrical supply or control of the machining unit (1) or for signal feedback from the machining unit (1),
c) the coupling system (2) connects the electrical connections (14, 15) of the machining unit (1) and the carrier system (3) to each other when coupled.

5. Machining unit system (1) according to one of the preceding claims, **characterised in that**
a) the coupling system (2) comprises at least one energy coupling (20, 21), wherein the energy required to operate the machining unit (1) is transmitted to the machining unit (1) via said energy coupling (20, 21), and/or
b) the coupling system (2) comprises at least one signal coupling (22, 23), wherein
b1) control signals are sent to the machining unit (1) to control said machining unit (1) and/or
b2) feedback signals are received from the machining unit (1) via said signal coupling (22, 23)

6. Machining unit system (1) according to one of the preceding claims, **characterised by** an identification system (26, 27) to identify the machining unit (1) that is coupled on.

7. Machining unit system (1) according to Claim 6,
**characterised in that**
a) the identification system (26, 27) comprises an identification tag (26) affixed to the machining unit (1), in particular in the form of an RFID transponder (26),
b) the identification system (26, 27) comprises an identification sensor (27), that is affixed to the coupling system (2) or to the carrier system (3), in particular in the form of an RIFD reader (27) or an optical sensor, and
c) the identification sensor (27) reads the identification tag (26) when the machining unit (1) is coupled to the carrier system (3) by means of the coupling system (2).

8. Machining unit system (1) according to one of the preceding claims, **characterised in that** the clamping system (9, 16, 17) comprises the following:
a) a clamping fitting (9), that is affixed to the machining unit (1).
b) a locating hole (16) to receive the clamping fitting, said locating hole (16) being arranged in the coupling system (2), and
c) a clamping element (17), in particular an eccentric shaft for detachably clamping the clamping fitting (9) in the locating hole (16).

9. Machining unit system (1) according to one of the preceding claims, **characterised in that**
a) the coupling system (2) comprises a coupling plate (2) that is arranged between the machining unit (1) and the carrier system (3), and/or
b) the coupling plate (2) comprises fluid couplings (20, 21) on the side of the machining unit (1), said fluid couplings opening automatically when coupled and closing automatically when uncoupled, and/or
c) the coupling plate (2) comprises plug-in electrical contacts (14, 15).

## Revendications

1. Système de machine d'usinage (1) pour usiner des pièces à usiner (5), comprenant
a) une machine d'usinage (1), en particulier une presse ou une poinçonneuse,
b) un système de support (3) et
c) un système de couplage (2) pour le couplage mécanique amovible de la machine d'usinage (1) au système de support (3),
**caractérisé en ce**
d) **que** la machine d'usinage (1) présente un raccord de conduit d'amenée et un raccord de conduit de retour afin de permettre une circulation de fluide, et
e) **que** le système de support (3) présente un raccord de conduit d'amenée et un raccord de conduit de retour afin de permettre la circulation de fluide, et
f) **que** le système de couplage (2) présente un conduit d'amenée et un conduit de retour afin de permettre la circulation de fluide à travers le système de couplage (2), et
g) **que** le système de couplage (2) présente un système de serrage (9, 16, 17), en particulier un système de serrage point zéro (9, 16, 17) afin de serrer et de fixer la machine d'usinage (1) au niveau du système de support (3).

2. Système de machine d'usinage (1) selon la revendication 1,
**caractérisé en ce**
a) **que** le système de couplage (2) couple la machine d'usinage (1) de manière fluidique au système de support (3), et
b) **que** le système de couplage (2) couple la machine d'usinage (1) également de manière électrique au système de support (3).

3. Système de machine d'usinage (1) selon la revendication 2,
**caractérisé en ce**
a) **que** la machine d'usinage (1) pour l'alimentation en fluide de la machine d'usinage (1) présente au moins un raccord de fluide (12, 13), en particulier un raccord hydraulique ou un raccord à air comprimé,
b) **que** le système de support (3) présente au moins un raccord de fluide pour l'alimentation en fluide de la machine d'usinage (1),
c) **que** le système de couplage (2) relie entre eux dans l'état couplé les raccords de fluide (12, 13) de la machine d'usinage (1) et du système de support (3).

4. Système de machine d'usinage (1) selon l'une quelconque des revendications précédentes, **caractérisé en ce**
a) **que** la machine d'usinage (1) présente au moins un raccord électrique (14, 15), en particulier pour l'alimentation en courant ou la commande de la machine d'usinage (1) ou pour le retour de signaux depuis la machine d'usinage (1),
b) **que** le système de support (3) présente au moins un raccord électrique, en particulier pour l'alimentation en courant ou la commande de la machine d'usinage (1) ou pour le retour de signaux depuis la machine d'usinage (1),
c) **que** le système de couplage (2) relie entre eux dans l'état couplé les raccords électriques (14, 15) de la machine d'usinage (1) et du système de support (3).

5. Système de machine d'usinage (1) selon l'une quelconque des revendications précédentes, **caractérisé en ce**
a) **que** le système de couplage (2) présente au moins un coupleur d'énergie (20, 21), dans lequel l'énergie requise pour le fonctionnement de la machine d'usinage (1) est transmise à la machine d'usinage (1) par l'intermédiaire du coupleur d'énergie (20, 21), et/ou
b) **que** le système de couplage (2) présente au moins un coupleur de signaux (22, 23), dans lequel
b1) des signaux de commande sont acheminés à la machine d'usinage (1) afin de commander la machine d'usinage (1) et/ou
b2) des signaux de retour reçus par la machine d'usinage (1)
par l'intermédiaire du coupleur de signaux (22, 23).

6. Système de machine d'usinage (1) selon l'une quelconque des revendications précédentes, **caractérisé par** un système d'identification (26, 27) pour l'identification de la machine d'usinage (1) accouplée.

7. Système de machine d'usinage (1) selon la revendication 6, **caractérisé en ce**
a) **que** le système d'identification (26, 27) présente un marquage d'identification (26), qui est installé au niveau de la machine d'usinage (1), en particulier sous la forme d'un transpondeur RFID (26),
b) **que** le système d'identification (26, 27) présente un capteur d'identification (27), qui est installé au niveau du système de couplage (2) ou au niveau du système de support (3), en particulier sous la forme d'un appareil de lecture RFID (27) ou d'un capteur optique, et
c) **que** le capteur d'identification (27) lit le marquage d'identification (26) quand la machine d'usinage (1) est couplée au système de support (3) au moyen du système de couplage (2).

8. Système de machine d'usinage (1) selon l'une quelconque des revendications précédentes, **caractérisé en ce que** le système de serrage (9, 16, 17) présente les éléments suivants :
a) un nipple de serrage (9), qui est installé au niveau de la machine d'usinage (1),
b) un alésage de logement (16) pour le nipple de serrage, dans lequel l'alésage de logement (16) est disposé dans le système de couplage (2), et
c) un élément de serrage (17), en particulier un arbre excentrique, pour serrer de manière amovible le nipple de serrage (9) dans l'alésage de logement (16).

9. Système de machine d'usinage (1) selon l'une quelconque des revendications précédentes, **caractérisé en ce**
a) **que** le système de couplage (2) présente une plaque de couplage (2), qui est disposée entre la machine d'usinage (1) et le système de support (3), et/ou
b) **que** la plaque de couplage (2) présente, sur le côté de la machine d'usinage (1), des coupleurs fluidiques (20, 21), qui, dans l'état couplé, procèdent à l'ouverture automatique et qui, dans l'état séparé, procèdent à la fermeture automatique, et/ou
c) **que** la plaque de couplage (2) présente des contacts enfichables (14, 15) électriques.
